# EUROPÄISCHE PATENTSCHRIFT

(11) **EP 1 402 206 B1**
(45) Veröffentlichungstag und Bekanntmachung des Hinweises auf die Patenterteilung: **09.11.2005**
(21) Anmeldenummer: 02745064.2
(22) Anmeldetag: 18.05.2002
(51) Int. Cl.: F16H 61/00

(54) **VERFAHREN UND SYSTEM ZUM STEUERN UND/ODER REGELN EINES DRUCKS**
METHOD AND SYSTEM FOR CONTROLLING AND/OR REGULATING A PRESSURE
PROCEDE ET SYSTEME DE COMMANDE ET/OU DE REGULATION D'UNE PRESSION

(30) Priorität: 22.06.2001 DE 10130232
(43) Veröffentlichungstag der Anmeldung: 31.03.2004
(73) Patentinhaber: ROBERT BOSCH GMBH, 70442 Stuttgart (DE)
(72) Erfinder: LUH, Joachim, 74321 Bietigheim-Bissingen (DE)
(86) Internationale Anmeldenummer: PCT/DE2002/001804
(87) Internationale Veröffentlichungsnummer: WO 2003/001086

(56) Entgegenhaltungen:
- EP-A- 0 482 900
- EP-A- 0 683 334
- EP-A- 0 893 627
- EP-A- 0 926 575
- DE-A- 2 307 857
- DE-A- 19 940 670

## Beschreibung

Die vorliegende Erfindung betrifft ein Verfahren zum Steuern und/oder Regeln eines Istdrucks, insbesondere eines Sekundärdrucks eines CVT-Getriebes, bei dem einem Regler, der ein Reglerausgangssignal liefert eine Regeldifferenz zugeführt wird. Weiterhin betrifft die vorliegende Erfindung ein System zum Steuern und/oder Regeln eines Istdrucks, insbesondere eines Sekundärdrucks eines CVT-Getriebes, mit einem Regler, der ein Reglerausgangssignal liefert und dem eine Regeldifferenz zugeführt wird.

### Stand der Technik

Gattungsgemäße Verfahren und gattungsgemäße Systeme kommen beispielsweise bei CVT-Getrieben zum Einsatz, um den Sekundärdruck zu steuern und/oder regeln. CVT-Getriebe sind stufenlos arbeitende Getriebe (CVT = "Continously Variable Transmission"). Sie umfassen im Wesentlichen zwei Kegelradpaare und ein beispielsweise als Schubgliederband ausgelegtes Umschlingungsteil. Dabei ist eines der Kegelradpaare mit einem Antrieb verbunden, beispielsweise einem Verbrennungsmotor, während das andere Kegelradpaar mit einem Abtrieb verbunden ist. Zur Einstellung der Übersetzung des CVT-Getriebes und der Spannung des Umschlingungsteils bestehen das Antriebskegelradpaar und das Abtriebskegelradpaar im Allgemeinen aus je einem axial feststehenden und einem axial beweglichen Kegelrad. Das Antriebskegelradpaar wird auch als Antriebsscheibe oder Primärscheibe bezeichnet; das Abtriebskegelradpaar wird auch als Abtriebsscheibe beziehungsweise Sekundärscheibe bezeichnet. Die Anpressung der axial beweglichen Kegelräder gegen das Umschlingungsteil erfolgt im Allgemeinen durch Aufbau eines,hydraulischen Drucks, beispielsweise durch eine Pumpe. Durch eine geeignete Wahl der Anpressdrücke kann die gewünschte Übersetzung des CVT-Getriebes und die erforderliche Spannung des Umschlingungsteils eingestellt werden, wobei der auf das axial bewegliche Kegelrad des Abtriebs- beziehungsweise Sekundärkegelradpaares wirkende Druck als Sekundärdruck bezeichnet wird. Die Pumpe für den hydraulischen Antrieb der Kegelräder kann beispielsweise durch den Verbrennungsmotor angetrieben werden. Für die Kraftübertragung vom Verbrennungsmotor zum Antriebskegelradpaar kann beispielsweise ein Drehmomentenwandler und ein Planetensatz mit Kupplungen für Vorwärts- und Rückwärtsfahrt vorhanden sein. Problematisch ist beispielsweise, wenn das Umschlingungsteil zwischen den beiden Kegelradpaaren durchdreht. In diesem Fall kann es zu starken Schädigungen des Getriebes kommen. Mitunter kann das Getriebe zerstört werden. Auch um ein derartiges Durchdrehen des Umschlingungsteils zu verhindern ist eine genaue Steuerung und/oder Regelung des Sekundärdrucks erforderlich.

Aus der DE 199 49 670 A1 ist ein System zur Erzeugung eines Signals zur hydraulischen Verstellung der Übersetzung eines CVT-Getriebes bekannt, bei dem ein Istdruck eingestellt wird, der einen Sekundärdruck des CVT-Getriebes darstellt. Einem Regler, der ein Reglerausgangssignal liefert, wird eine Regeldifferenz zugeführt, wobei der Regler ein Kennfeld aufweist, das in Abhängigkeit von der Regeldifferenz adaptiert wird.

### Vorteile der Erfindung

Das erfindungsgemäße Verfahren baut auf dem gattungsgemäßen Stand der Technik dadurch auf, dass der Regler Reglerparameter aufweist, die in Abhängigkeit von der Regeldifferenz veränderbar sind. Durch die in Abhängigkeit von der Regeldifferenz veränderbaren Reglerparameter kann beispielsweise die Geschwindigkeit, mit der ein Istdruck verringert wird, anders ausgelegt werden, als die Geschwindigkeit, mit der ein Istdruck vergrößert wird. Hierzu kann insbesondere das Vorzeichen der Regeldifferenz ausgewertet werden. Weiterhin ermöglichen es die veränderbaren Reglerparameter, beispielsweise, die Eigenschaften der Regelung für bestimmte Regeldifferenzen in besonders geeigneter Weise anzupassen. Somit ergibt sich eine Kombination der Vorteile von Steuerungseinrichtungen und Regelungseinrichtungen.

Bei dem erfindungsgemäßen Verfahren ist vorgesehen, dass die Reglerparameter derart verändert werden, dass sich ein schneller Aufbau und ein langsamer Abbau des Istdrucks ergibt. Dies ist beispielsweise im Zusammenhang mit CVT-Getrieben vorteilhaft, da der Druckregler an die Anforderungen der Anpresskrafteinstellung angepasst wird. Die Anpresskraft in Form des Sekundärdrucks darf, wie eingangs erwähnt, das für ein Durchrutschen oder Schlupfen des Umschlingungsteils oder Bandes kritische Niveau nicht unterschreiten, soll jedoch stationär dem Solldruck beziehungsweise der Sollanpresskraft entsprechen.

Bevorzugte Ausführungsformen des erfindungsgemäßen Verfahrens sehen vor, dass der Regler ein PID-Regler ist. Die Reglerparameter eines PID-Reglers sind beispielsweise gut dazu geeignet, derart verändert zu werden, dass ein schneller Aufbau und ein langsamer Abbau des Istdrucks ermöglicht wird.

Bei bevorzugten Ausführungsformen des erfindungsgemäßen Verfahrens ist weiterhin vorgesehen, dass der Regler ein digitaler Regler ist. Die Veränderung der Reglerparameter lässt sich bei digitalen Reglern in besonders einfacher Weise verwirklichen.

Bei vorteilhaften Weiterbildungen des erfindungsgemäßen Verfahrens ist weiterhin vorgesehen, dass zur Bildung der Regeldifferenz ein Solldruck mit zumindest einem Schwellenwert verglichen wird, und dass in Abhängigkeit von dem Ergebnis des Vergleichs des Solldrucks mit dem zumindest einen Schwellenwert eine Differenz aus dem Solldruck und einem Istdruck oder eine Differenz aus dem Schwellenwert und dem Istdruck bestimmt wird. Durch die Berücksichtigung des zumindest einen Schwellenwertes, beispielsweise eines minimal einstellbaren Sekundärdrucks eines CVT-Getriebes, kann verhindert werden, dass ein unstabiles Regelungsverhalten auftritt, beispielsweise wenn ein geforderter Solldruck physikalisch momentan nicht eingestellt werden kann. Im Zusammenhang mit einem PID-Regler kann beispielsweise verhindert werden, dass der I-Anteil des PID-Reglers und damit das Stellsignal wegläuft.

Vorteilhafte Weiterbildungen des erfindungsgemäßen Verfahrens sehen vor, dass ein Stellglied vorgesehen ist, das eine Stellgliedkennlinie aufweist, wobei dem Stellglied ein Stellsignal zugeführt wird. Bei dem Stellglied kann es sich beispielsweise um ein Ventil und/oder die Ansteuerung einer Pumpe handeln, die für den Druckaufbau vorgesehen ist.

Insbesondere im vorstehend erläuterten Zusammenhang ist bei dem erfindungsgemäßen Verfahren vorzugsweise weiterhin vorgesehen, dass die Stellgliedkennlinie durch einen Linearisierer linearisiert wird, der das Stellsignal liefert. Eine linearisierte Stellgliedkennlinie ist insbesondere in Verbindung mit einem PID-Regler vorteilhaft.

Bei dem erfindungsgemäßen Verfahren kann in diesem Zusammenhang weiterhin vorgesehen sein, dass der Linearisierer das Stellsignal auf einen vorherbestimmten Wertebereich begrenzt. Auch durch diese Maßnahme können unstabile Zustände der Regelung vermieden werden.

Bei bestimmten Ausführungsformen des erfindungsgemäßen Verfahrens kann vorgesehen sein, dass dem Linearisierer das Reglerausgangssignal direkt zugeführt wird.

Bei bevorzugten Ausführungsformen des erfindungsgemäßen Verfahrens ist jedoch vorgesehen, dass dem Linearisierer eine Summe aus dem Reglerausgangssignal und einem Vorsteuersignal zugeführt wird. In diesem Zusammenhang wird es als besonders vorteilhaft angesehen, dass die Vorsteuerung das stellsignal verändert, wenn der Solldruck erhöht wird. Sofern eine Verringerung des Solldrucks vorliegt, kann es vorteilhaft sein, dass die Vorsteuerung das Stellsignal nicht verändert, das heißt, dass das Vorsteuersignal 0 ist.

In diesem Zusammenhang kann bei dem erfindungsgemäßen Verfahren vorgesehen sein, dass das Vorsteuersignal auf der Grundlage des Vergleichs des Sollwertes mit dem zumindest einen Schwellenwert bestimmt wird. Dabei ist es beispielsweise möglich, der Vorsteuerung ein Eingangssignal zuzuführen, das der Summe der Regeldifferenz und des Istdrucks entspricht.

Vorteilhafterweise ist bei dem erfindungsgemäßen Verfahren weiterhin vorgesehen, dass der Schwellenwert aus Betriebsparametern des Getriebes bestimmt wird, insbesondere Größen, die die Pumpenfördermenge und die Getriebetemperatur repräsentieren.

Bei dem erfindungsgemäßen Verfahren kann in vorteilhafter Weise weiterhin vorgesehen sein, dass der Istdruck über eine Pumpe beeinflusst wird, und dass die Pumpenfördermenge aus der Motordrehzahl abgeleitet wird.

Insbesondere in diesem Zusammenhang ist bei dem erfindungsgemäßen Verfahren vorzugsweise vorgesehen, dass das Vorsteuersignal erzeugt wird, wenn der Solldruck erhöht wird, wie dies bereits erwähnt wurde.

Bei bevorzugten Weiterbildungen des erfindungsgemäßen Verfahrens ist vorgesehen, dass das Stellsignal in Abhängigkeit von einem Auswahlsignal entweder über das Reglerausgangssignal und/oder das Vorsteuersignal oder über ein Steuerungssignal erzeugt wird, das auf der Grundlage des Solldrucks und des zumindest einen Schwellenwerts erhalten wird. Insbesondere im Zusammenhang mit einem CVT-Getriebe kann das Auswahlsignal beispielsweise angeben, ob eine Pumpe Öl beziehungsweise ausreichend Öl fördert. In einem Zustand, in dem die Pumpe kein oder zuwenig Öl fördert, kann beispielsweise der PID-Regler durch eine Steuerung ohne Rückkopplung ersetzt werden, die das Steuerungssignal liefert. Das hat den Vorteil, dass der I-Anteil des PID-Reglers und damit das Stellsignal nicht bis zu einem Anschlag wegläuft. Beispielsweise bei einem Motorstart würde sonst anfangs ein zu hoher Sekundärdruck eingestellt werden, was den Start des Motors erschwert, weil der Starter gegen ein höheres Drehmoment arbeiten muss.

Jede Vorrichtung, die zur Durchführung einer Ausführungsform des erfindungsgemäßen Verfahrens geeignet ist, fällt in den Schutzbereich der zugehörigen Ansprüche.

Das erfindungsgemäße System baut auf dem gattungsgemäßen Stand der Technik dadurch auf, dass der Regler Reglerparameter aufweist, die in Abhängigkeit von der Regeldifferenz veränderbar sind. Durch die in Abhängigkeit von der Regeldifferenz veränderbaren Reglerparameter kann beispielsweise die Geschwindigkeit, mit der ein Istdruck verringert wird, anders ausgelegt werden, als die Geschwindigkeit, mit der ein Istdruck vergrößert wird, ähnlich wie bei dem erfindungsgemäßen Verfahren. Auch in diesem Fall kann hierzu insbesondere das Vorzeichen der Regeldifferenz ausgewertet werden. Weiterhin ermöglichen es die veränderbaren Reglerparameter auch im Zusammenhang mit dem erfindungsgemäßen System beispielsweise, die Eigenschaften der Regelung für bestimmte Regeldifferenzen in besonders geeigneter Weise anzupassen. Somit ergibt sich auch durch das erfindungsgemäße System eine Kombination der Vorteile von Steuerungseinrichtungen und Regelungseinrichtungen.

Auch bei dem erfindungsgemäßen System ist vorgesehen, dass die Reglerparameter derart verändert werden, dass sich ein schneller Aufbau und ein vergleichsweise langsamer Abbau des Istdrucks ergibt. Dies ist wie erwähnt beispielsweise im Zusammenhang mit CVT-Getrieben vorteilhaft, da der Druckregler an die Anforderungen der Anpresskrafteinstellung angepasst wird. Die Anpresskraft in Form des Sekundärdrucks darf, wie eingangs erwähnt, das für ein Durchrutschen oder Schlupfen des Umschlingungsteils oder Bandes kritische Niveau nicht unterschreiten, soll jedoch stationär dem Solldruck beziehungsweise der Sollanpresskraft entsprechen.

Bevorzugte Ausführungsformen des erfindungsgemäßen Systems sehen vor, dass der Regler ein PID-Regler ist. Die Reglerparameter eines PID-Reglers sind beispielsweise gut dazu geeignet, einen schnellen Aufbau und einen langsamen Abbau des Istdrucks zu ermöglichen, wie dies bereits im Zusammenhang mit dem erfindungsgemäßen Verfahren erläutert wurde.

Auch bei bevorzugten Ausführungsformen des erfindungsgemäßen Systems ist weiterhin vorgesehen, dass der Regler ein digitaler Regler ist. Die Veränderung der Reglerparameter lässt sich, wie bereits im Zusammenhang mit dem erfindungsgemäßen Verfahren erläutert, bei digitalen Reglern in besonders einfacher Weise verwirklichen.

Bei vorteilhaften Weiterbildungen des erfindungsgemäßen Systems ist weiterhin vorgesehen, dass es einen Vergleicher, der zur Bildung der Regeldifferenz einen Solldruck mit zumindest einem Schwellenwert vergleicht, und einen Subtrahierer aufweist, der in Abhängigkeit von dem Ergebnis des Vergleichs des Solldrucks mit dem zumindest einen Schwellenwert eine Differenz aus dem Solldruck und einem Istdruck oder eine Differenz aus dem Schwellenwert und dem Istdruck bestimmt. Durch die Berücksichtigung des zumindest einen Schwellenwertes, beispielsweise eines minimal einstellbaren Sekundärdrucks eines CVT-Getriebes, kann auch im Zusammenhang mit dem erfindungsgemäßen System verhindert werden, dass ein unstabiles Regelungsverhalten auftritt, beispielsweise wenn ein geforderter Solldruck physikalisch momentan nicht eingestellt werden kann. Bei einem PID-Regler kann, wie erwähnt, beispielsweise verhindert werden, dass der I-Anteil des PID-Reglers und damit das Stellsignal wegläuft.

Vorteilhafte Weiterbildungen des erfindungsgemäßen Systems sehen vor, dass es ein Stellglied aufweist, das eine Stellgliedkennlinie aufweist, wobei dem Stellglied ein Stellsignal zugeführt wird. Bei dem Stellglied kann es sich auch in diesem Zusammenhang beispielsweise um ein Ventil und/oder die Ansteuerung einer Pumpe handeln, die für den Druckaufbau vorgesehen ist.

Insbesondere im vorstehend erläuterten Zusammenhang ist bei dem erfindungsgemäßen System vorzugsweise weiterhin vorgesehen, dass es einen Linearisierer aufweist, der die Stellgliedkennlinie linearisiert und der das Stellsignal liefert. Eine linearisierte Stellgliedkennlinie ist insbesondere in Verbindung mit einem PID-Regler vorteilhaft, wie bereits im Zusammenhang mit dem erfindungsgemäßen Verfahren erläutert.

Auch bei dem erfindungsgemäßen System kann in diesem Zusammenhang weiterhin vorgesehen sein, dass der Linearisierer das Stellsignal auf einen vorherbestimmten Wertebereich begrenzt. Auch durch diese Maßnahme können unstabile Zustände der Regelung vermieden werden, was ebenfalls bereits erwähnt wurde.

Auch bei bestimmten Ausführungsformen des erfindungsgemäßen Systems kann vorgesehen sein, dass dem Linearisierer das Reglerausgangssignal zugeführt wird.

Bei bevorzugten Ausführungsformen des erfindungsgemäßen Systems ist jedoch vorgesehen, dass es eine Vorsteuerung aufweist, die ein Vorsteuersignal liefert, und dass dem Linearisierer eine Summe aus dem Reglerausgangssignal und dem Vorsteuersignal zugeführt wird, ähnlich wie bei dem erfindungsgemäßen Verfahren. Auch in diesem Zusammenhang wird es als besonders vorteilhaft angesehen, dass die Vorsteuerung das Stellsignal verändert, wenn der Solldruck erhöht wird. Sofern eine Verringerung des Solldrucks vorliegt, kann es wie erwähnt vorteilhaft sein, dass die Vorsteuerung das Stellsignal nicht verändert, das heißt, dass das Vorsteuersignal 0 ist.

In diesem Zusammenhang kann bei dem erfindungsgemäßen System vorgesehen sein, dass die Vorsteuerung das Vorsteuersignal auf der Grundlage des Vergleichs des Sollwertes mit dem zumindest einen Schwellenwert bestimmt. Dabei ist es beispielsweise möglich, der Vorsteuerung ein Eingangssignal zuzuführen, das der Summe der Regeldifferenz und des Istdrucks entspricht, ähnlich wie bei dem erfindungsgemäßen Verfahren.

Vorteilhafte Weiterbildungen des erfindungsgemäßen Systems sehen ebenfalls vor, dass der Schwellenwert aus Betriebsparametern des Getriebes bestimmt wird, insbesondere Größen, die die Pumpenfördermenge und die Getriebetemperatur repräsentieren.

Auch bei dem erfindungsgemäßen System kann in diesem Zusammenhang weiterhin vorgesehen sein, dass der Istdruck über eine Pumpe beeinflusst wird, und dass die Pumpenfördermenge aus der Motordrehzahl abgeleitet wird.

Insbesondere in diesem Zusammenhang ist auch bei dem erfindungsgemäßen System vorzugsweise vorgesehen, dass die Vorsteuerung das Vorsteuersignal zumindest dann erzeugt, wenn der Solldruck erhöht wird.

Bei bevorzugten Weiterbildungen des erfindungsgemäßen Systems ist vorgesehen, dass das Stellsignal in Abhängigkeit von einem Auswahlsignal entweder über das Reglerausgangssignal und/oder das Vorsteuersignal oder über ein Steuerungssignal erzeugt wird. Insbesondere im Zusammenhang mit einem CVT-Getriebe kann das Auswahlsignal wie erwähnt beispielsweise angeben, ob eine Pumpe Öl beziehungsweise ausreichend Öl fördert. In einem Zustand, in dem die Pumpe kein oder zuwenig Öl fördert, kann beispielsweise der PID-Regler durch eine Steuerung ohne Rückkopplung ersetzt werden, die das Steuerungssignal liefert, ähnlich wie im Fall des erfindungsgemäßen Verfahrens. Das hat den erwähnten Vorteil, dass der I-Anteil des PID-Reglers und damit das Stellsignal nicht bis zu einem Anschlag wegläuft. Beispielsweise bei einem Motorstart würde sonst, wie erwähnt, anfangs ein zu hoher Sekundärdruck eingestellt werden, was den Start des Motors erschwert, weil der Starter gegen ein höheres Drehmoment arbeiten muss.

Auch bei bevorzugten Weiterbildungen des erfindungsgemäßen Systems ist vorgesehen, dass das Steuerungssignal von einer Steuerung auf der Grundlage des Solldrucks und des zumindest einen Schwellenwertes bestimmt wird.

### Zeichnungen

Die Erfindung wird nachfolgend anhand der zugehörigen Zeichnungen noch näher erläutert.

Es zeigen:
- Figur 1: eine schematische Darstellung einer Ausführungsform eines CVT-Getriebes;
- Figur 2: ein Blockschaltbild, das die Eingangsgrößen einer Ausführungsform des erfindungsgemäßen Systems veranschaulicht;
- Figur 3: ein Blockschaltbild, das eine Ausführungsform des erfindungsgemäßen Systems veranschaulicht; und
- Figur 4: ein Flussdiagramm, das eine Ausführungsform des erfindungsgemäßen Verfahrens veranschaulicht.

### Beschreibung der Ausführungsbeispiele

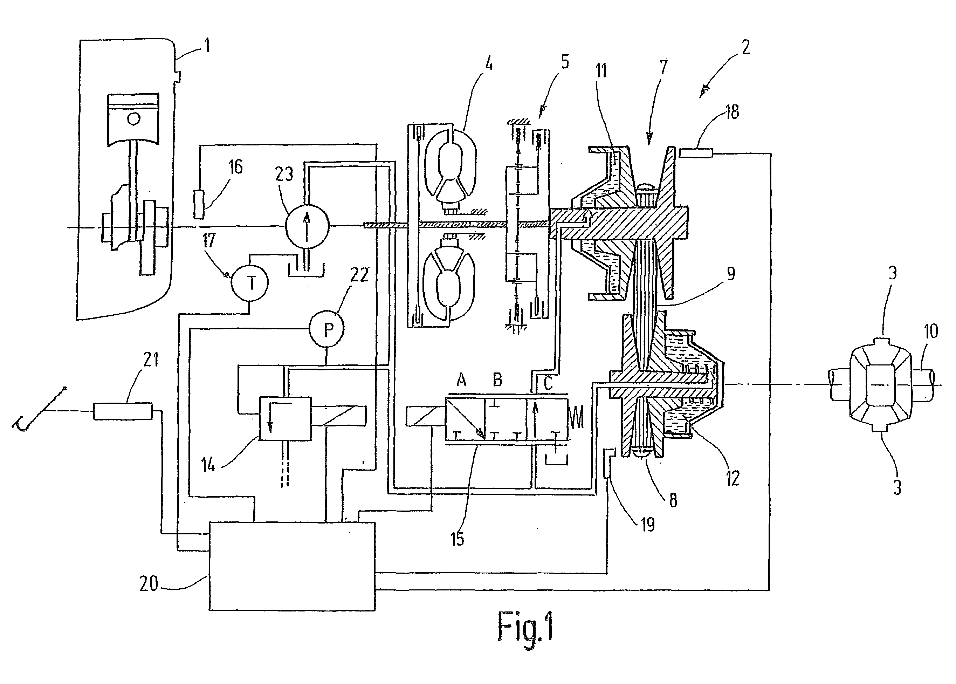

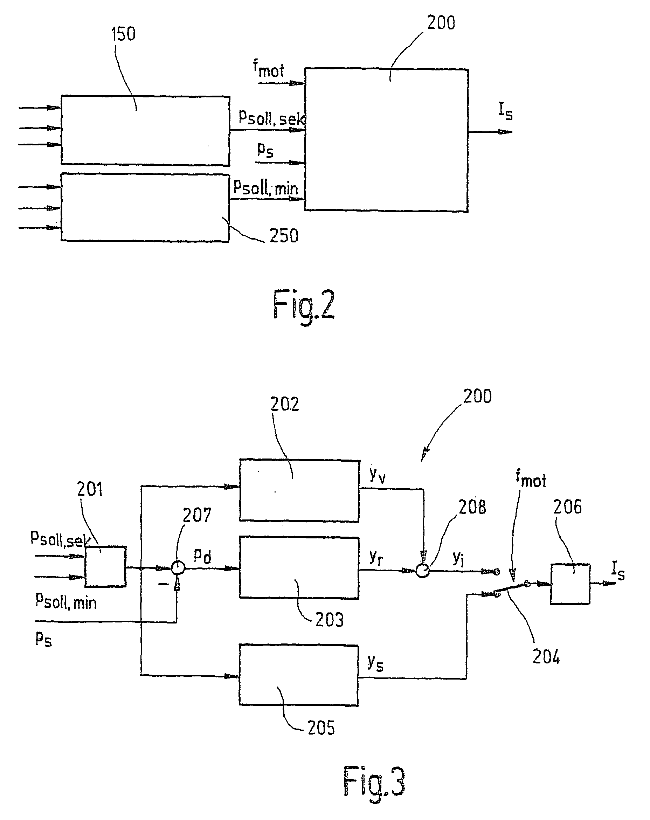

Figur 1 zeigt eine schematische Darstellung einer Ausführungsform eines CVT-Getriebes. Gemäß der Darstellung von Figur 1 ist ein insgesamt mit 2 bezeichnetes stufenloses Umschlingungsgetriebe (CVT-Getriebe) mit einem Verbrennungsmotor 1 gekoppelt, der nur andeutungsweise dargestellt ist. Das CVT-Getriebe 2 umfasst ein Primärkegelradpaar beziehungsweise eine Primärscheibe 7 und ein Sekundärkegelradpaar beziehungsweise eine Sekundärscheibe 8. Die Momentenübertragung zwischen dem Primärkegelradpaar 7 und dem Sekundärkegelradpaar 8 erfolgt über ein Umschlingungsteil, das im dargestellten Fall durch ein Schubgliederband 9 gebildet ist. Das Sekundärkegelradpaar 8 ist in an sich bekannter Weise mit einem Ausgleichsgetriebe 10 verbunden, das seinerseits mit einer Antriebswelle 3 gekoppelt ist. Dem Primärkegelradpaar 7 ist ein Wandler 4 mit einer Überbrückungskupplung sowie ein Planetensatz 5 mit Vorwärts- und Rückwärtskupplung vorgelagert. Eine Ölpumpe 23 steht mit der Abtriebswelle des Verbrennungsmotors 1 in Verbindung. Eine elektronische Getriebesteuerung 20 steht mit einem Sensor 22 zur Messung des Sekundärdrucks, einem Sensor 18 zur Messung der Primärdrehzahl, einem Sensor 19 zur Messung der Sekundärdrehzahl, einem Sensor 17 zur Messung der Getriebetemperatur, einem Sensor 16 zur Messung der Motordrehzahl und einem Sensor 21 zur Messung der Fahrpedalstellung in Verbindung. Die elektronische Getriebesteuerung beziehungsweise -regelung 20 steuert ein erstes Stellglied in Form eines Sekundärventils 14 und ein zweites Stellglied in Form eines hier nicht näher interessierenden Primärventils 15 an. Über das Sekundärventil 14 und das Primärventil 15 kann der Druck in der sekundären Ölkammer 12 und der primären Ölkammer 11 eingestellt werden. Der erfindungsgemäß eingesetzte Regler kann bezogen auf die Darstellung von Figur 1 Bestandteil der elektronischen Getriebesteuerung beziehungsweise -regelung sein. Durch die erfindungsgemäße Ansteuerung des sekundären Ventils 14 über ein Stellsignal Iₛ (beispielsweise über einen Strom oder ein Taktverhältnis) wird der Sekundärdruck in der sekundären Ölkammer 12 auf die erfindungsgemäße Weise gesteuert und/oder geregelt, wobei auf diese Steuerung und/oder Regelung nachfolgend unter Bezugnahme auf die Figuren 2 bis 4 noch näher eingegangen wird.

Figur 2 zeigt ein Blockschaltbild, das die Eingangsgrößen einer Ausführungsform des erfindungsgemäßen Systems veranschaulicht. Gemäß der Darstellung von Figur 2 ist ein Block 150 zur Bestimmung des Sollsekundärdrucks p_{soll,sek} vorgesehen, wobei dieser Sollsekundärdruck p_{soll,sek} ein Eingangssignal für den Block 200 bildet, der die erfindungsgemäße Steuerung und/oder Regelung durchführt und ein Stellsignal Iₛ liefert. Die Bildung des Sekundärdrucks p_{soll,sek} erfolgt gemäß dem Stand der Technik zum Beispiel aus den Signalen Fahrpedalstellung 21, Primärdrehzahl 18, Sekundärdrehzahl 19, Motordrehzahl 16 und gegebenenfalls weiteren Signalen. Dem Block 200 wird weiterhin ein Istdruck pₛ zugeführt, der bezogen auf die Darstellung von Figur 1 beispielsweise von dem Sensor 22 geliefert werden kann. Weiterhin ist ein Block 250 vorgesehen, der einen Schwellenwert liefert, der im dargestellten Fall durch einen minimal einstellbaren Sekundärdruck p_{soll,min} gebildet ist. Gemäß der Darstellung von Figur 2 liefert der Block 250 eine Schätzung des minimal einstellbaren Sekundärdrucks p_{soll,min}, wobei die Hydraulikschaltung zugrundegelegt wird. Der minimale Sekundärdruck p_{soll,min} kann zum Beispiel von dem von der Pumpe 23 geförderten Volumenstrom und der Getriebeöltemperatur abhängig sein, die beispielsweise über den Sensor 17 zur Messung der Getriebetemperatur erfasst werden kann. Sofern der Block 200 den bevorzugten PID-Regler enthält, kann durch Berücksichtigung des minimal einstellbaren Sekundärdrucks p_{soll,min} verhindert werden, dass der I-Anteil des PID-Reglers (und damit das Stellsignal) wegläuft, da der geforderte Sollsekundärdruck p_{soll,sek} nicht von der Hydraulik eingestellt werden kann. Dem Block 200 wird weiterhin ein Auswahlsignal in Form eines Flags fₘₒₜ zugeführt, das im dargestellten' Fall Informationen darüber enthält, ob die Pumpe 23 des Getriebes 2 läuft oder nicht. In Abhängigkeit von dem Auswahlsignal fₘₒₜ kann das Stellsignal Iₛ, das dem sekundären Ventil 14 zugeführt wird, beispielsweise über ein Steuerungssignal yₛ erzeugt werden, wie dies später anhand von Figur 3 noch näher erläutert wird.

Figur 3 zeigt ein Blockschaltbild, das eine Ausführungsform des erfindungsgemäßen Systems veranschaulicht. Gemäß der Darstellung von Figur 3 umfasst der Druckregler 200 mehrere Blöcke zur Bildung des Stellsignals Iₛ. Einem Block 201 wird der Solldruck p_{soll,sek} und ein Schwellenwert in Form eines momentan minimal einstellbaren Sekundärdrucks p_{soll,min} zugeführt. Der Block 201 begrenzt den Sollsekundärdruck auf den unteren Wert p_{soll,min}. Dieser gegebenenfalls begrenzte Sollsekundärdruck wird einem Subtrahierer 207 zugeführt, der den Istdruck pₛ subtrahiert und somit die Regeldifferenz p_{d} bildet. Diese Regeldifferenz p_{d} wird einem PID-Regler 203 zugeführt, dessen Parameter in Abhängigkeit von der Regeldifferenz p_{d} veränderbar sind. Weiterhin ist eine Vorsteuerung 202 vorgesehen, die zusätzlich zum PID-Regler 203 das Stellsignal Iₛ verändert, wenn der Sollsekundärdruck erhöht wird. Bei der Ausführungsform gemäß Figur 3 ist vorgesehen, dass die Vorsteuerung 202 nicht oder nur in geringem Umfang wirkt, wenn der Sollsekundärdruck verringert wird. Ein Block 206 ist dazu vorgesehen, die Stellgliedkennlinie, beispielsweise eine Ventilkennlinie, zu linearisieren und das Stellsignal Iₛ gegebenenfalls zu begrenzen. Durch die Parameterumschaltung des PID-Reglers 203 beziehungsweise die Aktivierung der Vorsteuerung 202, bei einer Anhebung des Sollsekundärdrucks, ist die Dynamik des Reglers abhängig von der Änderungsrichtung des Sekundärdrucks pₛ. Die Anhebung des Sekundärdrucks pₛ erfolgt schnell, wohingegen die Verringerung des Sekundärdrucks pₛ vergleichsweise langsam vorgenommen wird. Der Druckregler 200 ist somit an die Anforderungen der Anpresskrafteinstellung für ein CVT-Getriebe angepasst. Die Anpresskraft (in Form des Sekundärdrucks pₛ) darf das für ein Schlupfen des Schubgliederbandes 9 kritische Niveau nicht unterschreiten, soll jedoch stationär der Sollanpresskraft beziehungsweise dem Sollsekundärdruck entsprechen. Weiterhin wird ein Auswahlsignal in Form eines Flags fₘₒₜ berücksichtigt. Das Signal fₘₒₜ gibt an, ob die Pumpe 23 Öl beziehungsweise ausreichend Öl fördert. Die Pumpe 23 fördert beispielsweise dann Öl, wenn der Verbrennungsmotor 1 läuft, das heißt die Motordrehzahl eine Mindestdrehzahl erreicht hat. Das binäre Signal fₘₒₜ wird benutzt, um den Druckregler 200 in eine andere Betriebsart zu schalten. Beispielsweise kann in dem Zustand, in dem die Pumpe 23 kein oder zu wenig Öl fördert, der PID-Regler 203 durch eine Steuerung 205 ohne Rückkopplung ersetzt werden. Das hat den Vorteil, dass der I-Anteil des PID-Reglers (und damit das Stellsignal Iₛ) nicht (bis zu einem Anschlag) wegläuft. Beispielsweise beim Motorstart würde sonst anfangs ein zu hoher Sekundärdruck pₛ eingestellt werden, was den Start des Verbrennungsmotors 1 erschwert, da der Starter gegen ein höheres Drehmoment arbeiten muss. Mit dem in Figur 3 dargestellten System werden insbesondere die folgenden Vorteile erzielt: der Sekundärdruck wird schnell erhöht, jedoch langsam verringert, wodurch ein zu geringer Anpressdruck vermieden wird; durch die Begrenzung des Sekundärdrucks auf einen Minimalwert werden kürzere Druckaufbauzeiten ermöglicht; der Start eines Verbrennungsmotors wird vereinfacht.

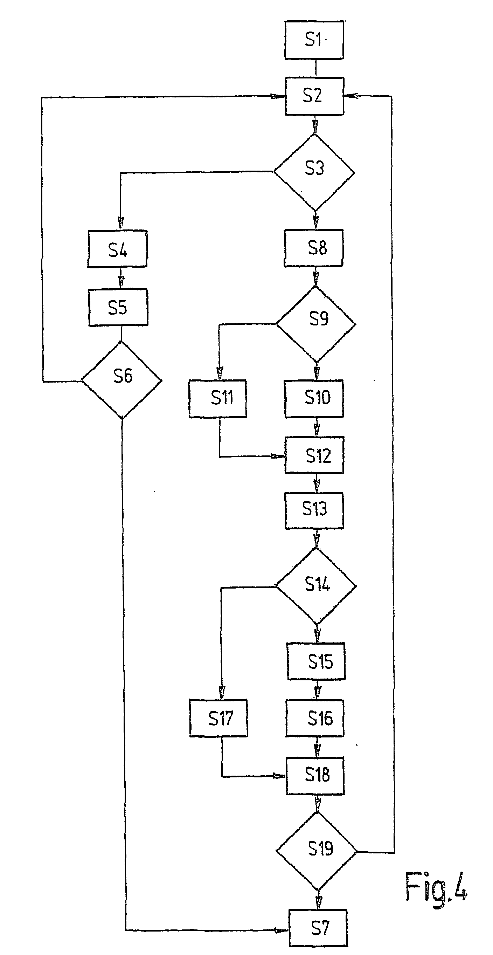

Figur 4 zeigt ein Flussdiagramm, das eine Ausführungsform des erfindungsgemäßen Verfahrens veranschaulicht. Dabei ergibt sich die Bedeutung der in Figur 4 dargestellten Schritte aus der folgenden Tabelle.

| Schritt | Bedeutung |
|---|---|
| S1 | Start |
| S2 | Erfasse Solldruck p_{soll,sek} |
| S3 | fₘₒₜ = 1? |
| S4 | Berechne Steuerungssignal yₛ aus Solldruck p_{soll,sek} und Schwellenwert p_{soll,min} |
| S5 | Führe Steuerungssignal yₛ dem Linearisierer 206 zu |
| S6 | Ende? |
| S7 | Ende |
| S8 | Erfasse Istdruck pₛ |
| S9 | p_{soll,sek} > p_{soll,min}? |
| S10 | p_{d} = p_{soll,sek} - pₛ |
| S11 | p_{d} = p_{soll,min} - pₛ |
| S12 | Wähle Reglerparameter |
| S13 | Bestimme yᵣ |
| S14 | Wurde Solldruck erhöht? |
| S15 | Bestimme Vorsteuersignal yᵥ |
| S16 | yᵢ = yᵥ + yᵣ |
| S17 | yᵢ = yᵣ |
| S18 | Erzeuge Stellsignal Iₛ |
| S19 | Ende? |

Die in Figur 4 dargestellte Ausführungsform des erfindungsgemäßen Verfahrens beginnt beim Schritt S1.

Beim Schritt S2 wird der Solldruck p_{soll,sek} erfasst, beispielsweise der Sollsekundärdruck des in Figur 1 dargestellten CVT-Getriebes. Bezogen auf die Darstellung von Figur 1 kann der Solldruck beispielsweise in Abhängigkeit der über dem Sensor 21 erfassten Fahrpedalstellung bestimmt werden.

Beim Schritt S3 wird überprüft, ob ein Auswahlsignal in Form eines Flags fₘₒₜ den Wert 1 oder den Wert 0 hat. Das Flag fₘₒₜ hat den Wert 1, wenn ein zur Einstellung des Solldrucks p_{soll,sek} erforderlicher Druck erzeugt werden kann, beispielsweise wenn die in Figur 1 dargestellte Pumpe 23 eine ausreichende Menge Öl fördert. Wenn beim Schritt S3 festgestellt wird, dass ein zur Einstellung des Solldrucks p_{soll,sek} erforderlicher Druck nicht aufgebaut werden kann, wird zum Schritt S4 verzweigt.

Im Schritt S4 wird ein Steuerungssignal yₛ aus dem Solldruck p_{soll,sek} und dem Schwellenwert p_{soll,min} berechnet, der bezogen auf die Darstellung von Figur 1 dem momentan minimal einstellbaren Sekundärdruck entspricht.

Beim Schritt S5 wird das beim Schritt S4 bestimmte Steuerungssignal yₛ dem Linearisierer zugeführt, der in Figur 3 mit dem Bezugszeichen 206 versehen ist. Somit wird das Stellsignsl Iₛ ohne Berücksichtigung eines rückgekoppelten Signals bestimmt, das heißt in Form einer Steuerung, wenn das Flag fₘₒₜ den Wert 0 hat.

Beim Schritt S6 wird überprüft, ob der Verfahrensablauf beendet werden soll. Ist dies der Fall, so wird zum Schritt S7 verzweigt, bei dem die Ausführungsform des erfindungsgemäßen Verfahrens endet. Anderenfalls wird zurück zum Schritt S2 verzweigt.

Wenn das Flag fₘₒₜ beim Schritt S3 den Wert 1 hat, beispielsweise wenn die Pumpe 23 von Figur 1 einen ausreichenden Druck liefern kann, wird zum Schritt S8 verzweigt.

Im Schritt S8 wird der Istdruck pₛ erfasst, wobei dies bezogen auf die Darstellung von Figur 1 über den Sensor 22 erfolgen kann, der den Sekundärdruck misst.

Beim Schritt S9 wird überprüft, ob der Solldruck p_{soll,sek} größer als ein gegebener Schwellenwert p_{soll,min} ist, der im dargestellten Fall den momentan minimal einstellbaren Druck angibt. Sofern der Solldruck p_{soll,sek} größer als der Schwellenwert p_{soll,min} ist, wird zum Schritt S10 verzweigt.

Beim Schritt S10 wird die Regeldifferenz p_{d} als Differenz aus dem Solldruck p_{soll,sek} und dem Istdruck pₛ bestimmt.

Falls beim Schritt S9 festgestellt wird, dass der Solldruck p_{soll,sek} nicht größer als der Schwellenwert p_{soll,min} ist, wird zum Schritt S11 verzweigt, wo die Regeldifferenz als Differenz aus dem Schwellenwert' p_{soll,min} und dem Istdruck pₛ bestimmt wird.

Beim Schritt S12 werden die Reglerparameter gewählt, dies erfolgt, insbesondere in Abhängigkeit vom Vorzeichen der Regeldifferenz p_{d}, derart, dass sich der Istdruck pₛ beziehungsweise der Sekundärdruck schnell erhöht jedoch nur langsam verringert. Bei dem in Figur 1 dargestellten CVT-Getriebe 2 kann dadurch beispielsweise sichergestellt werden, dass ein Schlupfen beziehungsweise Durchdrehen des Schubgliederbandes 9 auftritt, das eine Beschädigung des Getriebes 2 hervorrufen könnte.

Beim Schritt S13 wird das Reglerausgangssignal yᵣ bestimmt, beispielsweise durch den PID-Regler 203 gemäß Figur 3.

Beim Schritt S14 wird überprüft, ob der Solldruck erhöht wurde oder nicht. Sofern der Solldruck nicht erhöht wurde wird zum Schritt S17 verzweigt.

Im Schritt S17 wird ein Eingangssignal yᵢ für den in Figur 3 dargestellten Linearisierer 206 erzeugt, indem es auf das Reglerausgangssignal yᵣ gesetzt wird. Bezogen auf die Darstellung von Figur 3 bedeutet dies, dass dem Addierer 208 das Reglerausgangssignal yᵣ zugeführt wird, während das vom Block 202 gelieferte Vorsteuersignal yᵥ den Wert 0 hat (sofern die Schritt S8 bis S19 durchlaufen werden, befindet sich der in Abhängigkeit von dem Flag fₘₒₜ gesteuerte Schalter 204 in einer Stellung, in dem das Signal yᵢ dem Linearisierer 206 zugeführt wird, das heißt in der in Figur 3 nicht gezeigten Stellung).

Sofern beim Schritt S14 festgestellt wird, dass eine Solldruckerhöhung vorliegt, wird zum Schritt S15 verzweigt, wo ein Vorsteuersignal yᵥ erzeugt wird (siehe beispielsweise Block 202 von Figur 3). Das bei der dargestellten Ausführungsform nur im Falle einer Solldruckerhöhung erzeugte Vorsteuersignal yᵥ wird derart erzeugt, dass es zu einer schnellen Erhöhung des Istdrucks pₛ beiträgt.

Beim Schritt S16 wird das Eingangssignal für den Linearisierer 206 als Summe aus dem Reglerausgangssignal yᵣ und dem Vorsteuersignal yᵥ festgelegt.

Beim Schritt S18 wird das Stellsignal Iₛ erzeugt. Bezogen auf die Darstellung von Figur 3 erfolgt dies durch den Linearisierer 206, der optional weiterhin eine Begrenzung des Stellsignals Iₛ vornehmen kann.

Beim Schritt S19 wird überprüft, ob der Verfahrensablauf beendet werden soll. Ist dies der Fall, so wird zum Schritt S7 verzweigt, wo die dargestellte Ausführungsform des erfindungsgemäßen Verfahrens endet.

Anderenfalls wird zurück zum Schritt S2 verzweigt, und der Verfahrensablauf wiederholt sich in der beschriebenen Weise.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Verfahren zum Steuern und/oder Regeln eines Istwertes (pₛ) eines Sekundärdrucks eines CVT-Getriebes, bei dem einem Regler (203), der ein Reglerausgangssignal (yᵣ) liefert, eine Regeldifferenz (P_{d}) zugeführt wird und der Regler in Abhängigkeit von der Regeldifferenz (p_{d}) veränderbare Regelparameter aufweist, **dadurch gekennzeichnet, dass** der Regler Regelparameter aufweist, die in Abhängigkeit von der Regeldifferenz (p_{d}) derart verändert werden, dass sich ein schneller Aufbau des Istwertes (pₛ) und ein langsamer Abbau des Istwertes ergibt.

2. Verfahren nach einem der vorhergehenden Ansprüche, **dadurch gekennzeichnet, dass** der Regler (203) ein PID-Regler ist.

3. Verfahren nach einem der vorhergehenden Ansprüche, **dadurch gekennzeichnet, dass** der Regler (203) ein digitaler Regler ist.

4. Verfahren nach einem der vorhergehenden Ansprüche, **dadurch gekennzeichnet, dass** zur Bildung der Regeldifferenz (p_{d}) ein Sollwert (p_{soll,sek}) mit zumindest einem Schwellenwert (p_{soll,min}) verglichen wird, und dass in Abhängigkeit von dem Ergebnis des Vergleichs des Sollwertes (p_{soll,sek}) mit dem zumindest einen Schwellenwert (p_{soll,min}) eine Differenz aus dem Sollwert (p_{soll,sek}) und einem Istwert (pₛ) oder eine Differenz aus dem Schwellenwert (p_{soll,min}) und dem Istwert (pₛ) bestimmt wird.

5. Verfahren nach einem der vorhergehenden Ansprüche, **dadurch gekennzeichnet, dass** ein Stellglied vorgesehen ist, das eine Stellgliedkennlinie aufweist, wobei dem Stellglied ein Stellsignal (Iₛ) zugeführt wird.

6. Verfahren nach einem der vorhergehenden Ansprüche, **dadurch gekennzeichnet, dass** die Stellgliedkennlinie durch einen Linearisierer (206) linearisiert wird, der das Stellsignal liefert (Iₛ).

7. Verfahren nach einem der vorhergehenden Ansprüche, **dadurch gekennzeichnet, dass** der Linearisierer (206) das Stellsignal (Iₛ) auf einen vorherbestimmten Wertebereich begrenzt.

8. Verfahren nach einem der vorhergehenden Ansprüche, **dadurch gekennzeichnet, dass** dem Linearisierer (206) das Reglerausgangssignal (yᵣ) zugeführt wird.

9. Verfahren nach einem der vorhergehenden Ansprüche, **dadurch gekennzeichnet, dass** dem Linearisierer (206) eine Summe (yᵢ) aus dem Reglerausgangssignal (yᵣ) und einem Vorsteuersignal (yᵥ) zugeführt wird.

10. Verfahren nach einem der vorhergehenden Ansprüche, **dadurch gekennzeichnet, dass** das Vorsteuersignal (yᵥ) auf der Grundlage des Vergleichs des Sollwertes (p_{soll,sek}) mit dem zumindest einen Schwellenwert (p_{soll,min}) bestimmt wird.

11. Verfahren nach einem der vorhergehenden Ansprüche, **dadurch gekennzeichnet, dass** der Schwellenwert (p_{soll,min}) aus Betriebsparametern des Getriebes bestimmt wird, insbesondere Größen, die die Pumpenfördermenge und die Getriebetemperatur repräsentieren.

12. Verfahren nach einem der vorhergehenden Ansprüche, **dadurch gekennzeichnet, dass** der Istwert (pₛ) über eine Pumpe beeinflusst wird, und dass die Pumpenfördermenge aus der Motordrehzahl abgeleitet wird.

13. Verfahren nach einem der vorhergehenden Ansprüche, **dadurch gekennzeichnet, dass** das Vorsteuersignal (yᵥ) erzeugt wird, wenn der Sollwert (p_{soll,sek}) erhöht wird.

14. Verfahren nach einem der vorhergehenden Ansprüche,
**dadurch gekennzeichnet, dass** das Stellsignal (Iₛ) in Abhängigkeit von einem Auswahlsignal (fₘₒₜ) entweder über das Reglerausgangssignal (yᵣ) und/oder das Vorsteuersignal (yᵥ) oder über ein Steuerungssignal (yₛ) erzeugt wird, das auf der Grundlage des Sollwertes (p_{soll,sek}) und des zumindest einen Schwellenwertes (p_{soll,min}) erhalten wird.

15. Vorrichtung zur Durchführung des Verfahrens nach einem der vorhergehenden Ansprüche.

16. System zum Steuern und/oder Regeln eines Istwertes (pₛ) eines Sekundärdrucks eines CVT-Getriebes, mit einem Regler (203), der ein Reglerausgangssignal (yᵣ) liefert und dem eine Regeldifferenz (P_{d}) zugeführt wird und der in Abhängigkeit von der Regeldifferenz (p_{d}) veränderbare Regelparameter aufweist, **dadurch gekennzeichnet, dass** der Regler Regelparameter aufweist, die in Abhängigkeit von der Regeldifferenz (p_{d}) derart verändert werden, dass sich ein schneller Aufbau des Istwertes (pₛ) und ein vergleichsweise langsamer Abbau des Istwertes ergibt.

17. System nach Anspruch 16, **dadurch gekennzeichnet, dass** der Regler (203) ein PID-Regler ist.

18. System nach einem der Ansprüche 16 bis 17, **dadurch gekennzeichnet, dass** der Regler (203) ein digitaler Regler ist.

19. System nach einem der Ansprüche 16 bis 18, **dadurch gekennzeichnet, dass** es einen Vergleicher (201), der zur Bildung der Regeldifferenz (p_{d}) einen Sollwert (p_{soll,sek}) mit zumindest einem Schwellenwert (p_{soll,min}) vergleicht, und einen Subtrahierer (207) aufweist, der in Abhängigkeit von dem Ergebnis des Vergleichs des sollwertes (p_{soll,sek}) mit dem zumindest einen Schwellenwert (p_{soll,min}) eine Differenz aus dem Sollwert (p_{soll,sek}) und einem Istwert (pₛ) oder eine Differenz aus dem Schwellenwert (p_{soll,min}) und dem Istwert (pₛ) bestimmt.

20. System nach einem der Ansprüche 16 bis 19, **dadurch gekennzeichnet, dass** es ein Stellglied aufweist, das eine Stellgliedkennlinie aufweist, wobei dem Stellglied ein Stellsignal (Iₛ) zugeführt wird.

21. System nach einem der Ansprüche 16 bis 20, **dadurch gekennzeichnet, dass** es einen Linearisierer (206) aufweist, der die Stellgliedkennlinie linearisiert und der das Stellsignal liefert (Iₛ).

22. System nach einem der Ansprüche 16 bis 21, **dadurch gekennzeichnet, dass** der Linearisierer (206) das Stellsignal (Iₛ) auf einen vorherbestimmten Wertebereich begrenzt.

23. System nach einem der Ansprüche 16 bis 22, **dadurch gekennzeichnet, dass** dem Linearisierer (206) das Reglerausgangssignal (yᵣ) zugeführt wird.

24. System nach einem der Ansprüche 16 bis 23, **dadurch gekennzeichnet, dass** es eine Vorsteuerung (202) aufweist, die ein Vorsteuersignal (yₛ) liefert, und dass dem Linearisierer (206) eine Summe (yᵢ) aus dem Reglerausgangssignal (yᵣ) und dem Vorsteuersignal (yᵥ) zugeführt wird.

25. System nach einem der Ansprüche 16 bis 24, **dadurch gekennzeichnet, dass** die Vorsteuerung (202) das Vorsteuersignal (yᵥ) auf der Grundlage des Vergleichs des Sollwertes (p_{soll,sek}) mit dem zumindest einen Schwellenwert (p_{soll,min}) bestimmt.

26. System nach einem der Ansprüche 16 bis 25, **dadurch gekennzeichnet, dass** der Schwellenwert (p_{soll,min}) aus Betriebsparametern des Getriebes bestimmt wird, insbesondere Größen, die die Pumpenfördermenge und die Getriebetemperatur repräsentieren.

27. System nach einem der Ansprüche 16 bis 26, **dadurch gekennzeichnet, dass** der Istdruck (pₛ) über eine Pumpe beeinflusst wird, und dass die Pumpenfördermenge aus der Motordrehzahl abgeleitet wird.

28. System nach einem der Ansprüche 16 bis 27, **dadurch gekennzeichnet, dass** die Vorsteuerung (202) das Vorsteuersignal (yᵥ) zumindest dann erzeugt, wenn der Sollwert (p_{soll,sek}) erhöht wird.

29. System nach einem der Ansprüche 16 bis 28, **dadurch gekennzeichnet, dass** das Stellsignal (Iₛ) in Abhängigkeit von einem Auswahlsignal (fₘₒₜ) entweder über das Reglerausgangssignal (yᵣ) und/oder das Vorsteuersignal (yᵥ) oder über ein Steuerungssignal (yₛ) erzeugt wird.

30. System nach einem der Ansprüche 16 bis 29, **dadurch gekennzeichnet, dass** das Steuerungssignal (yₛ) von einer Steuerung (205) auf der Grundlage des Sollwertes (p_{soll,sek}) und des zumindest einen Schwellenwertes (p_{soll,min}) bestimmt wird.

## Claims

1. Method for controlling and/or regulating an actual value (pₛ) of a secondary pressure of a continuously variable transmission, in which the controller (203) delivering a controller output signal (yᵣ) is supplied with a control difference (p_{d}) and the controller has control parameters variable as a function of the control difference (p_{d}), **characterized in that** the controller has control parameters which are varied as a function of the control difference (p_{d}) in such a way that a rapid build-up of the actual value (pₛ) and a slow reduction of the actual value occur.

2. Method according to Claim 1, **characterized in that** the controller (203) is a PID controller.

3. Method according to one of the preceding claims, **characterized in that** the controller (203) is a digital controller.

4. Method according to one of the preceding claims, **characterized in that**, to form the control difference (p_{d}), a desired value (p_{des,sec}) is compared with at least one threshold value (p_{des,min}), and **in that**, as a function of the result of the comparison of the desired value (p_{des,sec}) with the at least one threshold value (p_{des,min}), a difference is determined from the desired value (p_{des,sec}) and an actual value (pₛ) a difference is determined from the threshold value (p_{des,min}) and the actual value (pₛ).

5. Method according to one of the preceding claims, **characterized in that** an actuator is provided, which has an actuator characteristic curve, the actuator being supplied with an actuating signal (Iₛ).

6. Method according to one of the preceding claims, **characterized in that** an actuator characteristic curve is linearized by means of a linearizer (206) which delivers the actuating signal (Iₛ).

7. Method according to one of the preceding claims, **characterized in that** the linearizer (206) limits the actuating signal (Iₛ) to a predetermined value range.

8. Method according to one of the preceding claims, **characterized in that** the linearizer (206) is supplied with the controller output signal (yᵣ).

9. Method according to one of the preceding claims, **characterized in that** the linearizer (206) is supplied with a sum (yᵢ) of the controller output signal (yᵣ) and of a pilot control signal (yᵥ).

10. Method according to one of the preceding claims, **characterized in that** the pilot control signal (yᵥ) is determined on the basis of the comparison of the desired value (p_{des,sec}) with the at least one threshold value (p_{des,min}).

11. Method according to one of the preceding claims, **characterized in that** the threshold value (p_{des,min}) is determined from operating parameters of the transmission, in particular variables which represent the pump conveying quantity and the transmission temperature.

12. Method according to one of the preceding claims, **characterized in that** the actual value (pₛ) is influenced via a pump and **in that** the pump conveying quantity is derived from the engine rotational speed.

13. Method according to one of the preceding claims, **characterized in that** the pilot control signal (yᵥ) is generated where a desired value (p_{des,sec}) is increased.

14. Method according to one of the preceding claims, **characterized in that** the actuating signal (Iₛ) is generated as a function of a selection signal (f_{eng}) either via the controller output signal (yᵣ) and/or the pilot control signal (yᵥ) or via a control signal (yₛ) which is obtained on the basis of a desired value (p_{des,sec}) and of the at least one threshold value (p_{des,min}).

15. Device for carrying out the method according to one of the preceding claims.

16. System for controlling and/or regulating an actual value (pₛ) of a secondary pressure of a continuously variable transmission, with a controller (203) which delivers a controller output signal (yᵣ) and is supplied with a control difference (p_{d}) and which has control parameters variable as a function of the control difference (p_{d}), **characterized in that** the controller has control parameters which are varied as a function of the control difference (p_{d}) in such a way that a rapid build-up of the actual value (pₛ) and a comparatively slow reduction of the actual value occur.

17. System according to Claim 16, **characterized in that** the controller (203) is a PID controller.

18. System according to either one of Claims 16 and 17, **characterized in that** the controller (203) is a digital controller.

19. System according to one of Claims 16 to 18, **characterized in that** it has a comparator (201), which, to form the control difference (p_{d}), compares a desired value (p_{des,sec}) with at least one threshold value (p_{des,min}), and a subtractor (207) which, as a function of the result of the comparison of the desired value (p_{des,sec}) with the at least one threshold value (p_{des,min}), determines a difference from the desired value (p_{des,sec}) and an actual value (pₛ) or a difference from the threshold value (p_{des,min}) and the actual value (pₛ).

20. System according to one of Claims 16 to 19, **characterized in that** it has an actuator having an actuator characteristic curve, the actuator being supplied with an actuating signal (Iₛ).

21. System according to one of Claims 16 to 20, **characterized in that** it has a linearizer (206) which linearizes the actuator characteristic curve and which delivers the actuating signal (Iₛ).

22. System according to one of Claims 16 to 21, **characterized in that** the linearizer (206) limits the actuating signal (Iₛ) to a predetermined value range.

23. System according to one of Claims 16 to 22, **characterized in that** the linearizer (206) is supplied with the controller output signal (yᵣ).

24. System according to one of Claims 16 to 23, **characterized in that** it has a pilot control (202) which delivers a pilot control signal (yₛ) and **in that** the linearizer (206) is supplied with a sum (yᵢ) of the controller output signal (yᵣ) and of the pilot control signal (yᵥ).

25. System according to one of Claims 16 to 24, **characterized in that** the pilot control (202) determines the pilot control signal (yᵥ) on the basis of the comparison of the desired value (p_{des,sec}) with the at least one threshold value (p_{des,min}).

26. System according to one of Claims 16 to 25, **characterized in that** the threshold value (p_{des,min}) is determined from operating parameters of the transmission, in particular variables which represent the pump conveying quantity and the transmission temperature.

27. System according to one of Claims 16 to 26, **characterized in that** the actual value (pₛ) is influenced via a pump, and **in that** the pump conveying quantity is derived from the engine rotational speed.

28. System according to one of Claims 16 to 27, **characterized in that** the pilot control (202) generates the pilot control signal (yᵥ) at least when the desired value (p_{des,sec}) is increased.

29. System according to one of Claims 16 to 28, **characterized in that** the actuating signal (Iₛ) is generated as a function of a selection signal (f_{eng}) either via the controller output signal (yᵣ) and/or the pilot control signal (yᵥ) or via a control signal (yₛ).

30. System according to one of Claims 16 to 29, **characterized in that** the control signal (yₛ) is determined by a control (205) on the basis of the desired value (p_{des,sec}) and of the at least one threshold value (p_{des,min}).

## Revendications

1. Procédé de commande et/ou de régulation d'une valeur réelle (pₛ) d'une pression secondaire d'un engrenage CVT, dans lequel un régulateur (203) qui délivre un signal de sortie de régulateur (yᵣ) reçoit une différence de régulation (p_{d}), et le régulateur présente des paramètres de régulation variables en fonction de la différence de régulation (p_{d}),
**caractérisé en ce que**
le régulateur présente des paramètres de régulation qui sont variables en fonction de la différence de régulation (p_{d}) de telle sorte que l'on obtient une montée rapide de la valeur réelle (pₛ) et une descente lente de la valeur réelle.

2. Procédé selon la revendication 1,
**caractérisé en ce que**
le régulateur (203) est un régulateur PID.

3. Procédé selon l'une quelconque des revendications précédentes,
**caractérisé en ce que**
le régulateur (203) est un régulateur numérique.

4. Procédé selon l'une quelconque des revendications précédentes,
**caractérisé en ce que**
pour former la différence de régulation (p_{d}) une valeur de consigne (p_{cons,sec}) est comparée avec au moins une valeur seuil (p_{cons,min}), et en fonction du résultat de la comparaison de la valeur de consigne (p_{cons,sec}) avec l'au moins une valeur seuil (p_{cons,min}) on détermine une différence à partir de la valeur de consigne (p_{cons,sec}) et d'une valeur réelle (pₛ), ou une différence à partir de la valeur seuil (p_{cons,min}) et de la valeur réelle (pₛ).

5. Procédé selon l'une quelconque des revendications précédentes,
**caractérisé en ce qu'**
un organe de réglage présente une ligne caractéristique d'organe de réglage et reçoit un signal de réglage (Iₛ).

6. Procédé selon l'une quelconque des revendications précédentes,
**caractérisé en ce que**
la ligne caractéristique d'organe de réglage est linéarisée par un élément de correction (206) qui fournit le signal de réglage (Iₛ).

7. Procédé selon l'une quelconque des revendications précédentes,
**caractérisé en ce que**
l'élément de correction (206) limite le signal de réglage (Iₛ) à une plage de valeurs prédéterminée.

8. Procédé selon l'une quelconque des revendications précédentes,
**caractérisé en ce que**
l'élément de correction (206) reçoit le signal de sortie de régulateur (yᵣ).

9. Procédé selon l'une quelconque des revendications précédentes,
**caractérisé en ce que**
l'élément de correction (206) reçoit une somme (yᵢ) formée par le signal de sortie de régulateur (yᵣ) et un signal pilote (yᵥ).

10. Procédé selon l'une quelconque des revendications précédentes,
**caractérisé en ce que**
le signal pilote (yᵥ) est déterminé sur la base de la comparaison de la valeur de consigne (p_{cons,sec}) avec l'au moins une valeur seuil (p_{cons,min}).

11. Procédé selon l'une quelconque des revendications précédentes,
**caractérisé en ce que**
la valeur seuil (p_{cons,min}) est déterminée à partir de paramètres de fonctionnement de la boîte de vitesse, notamment de grandeurs qui représentent le débit de la pompe et la température de la boîte.

12. Procédé selon l'une quelconque des revendications précédentes,
**caractérisé en ce que**
la valeur réelle (pₛ) est influencée par une pompe, et le débit de la pompe est déduit de la vitesse de rotation du moteur.

13. Procédé selon l'une quelconque des revendications précédentes,
**caractérisé en ce que**
le signal pilote (yᵥ) est généré lorsque la valeur de consigne (p_{cons,sec}) est augmentée.

14. Procédé selon l'une quelconque des revendications précédentes,
**caractérisé en ce que**
le signal de réglage (Iₛ) est généré en fonction d'un signal de sélection (fₘₒₜ), soit par le signal de sortie de régulateur (yᵣ) et/ou le signal pilote (yᵥ), soit par un signal de commande (yₛ) obtenu sur la base de la valeur de consigne (p_{cons,sec}) et de l'au moins une valeur seuil (p_{cons,min}).

15. Dispositif pour réaliser le procédé selon l'une quelconque des revendications précédentes.

16. Système de commande et/ou de régulation d'une valeur réelle (pₛ) d'une pression secondaire d'un engrenage CVT, dans lequel un régulateur (203) qui délivre un signal de sortie de régulateur (yᵣ) reçoit une différence de régulation (p_{d}) et présente des paramètres de régulation variables en fonction de la différence de régulation (p_{d}),
**caractérisé en ce que**
le régulateur présente des paramètres de régulation qui sont variables en fonction de la différence de régulation (p_{d}) de telle sorte que l'on obtient une montée rapide de la valeur réelle (pₛ) et une descente lente de la valeur réelle.

17. Système selon la revendication 16,
**caractérisé en ce que**
le régulateur (203) est un régulateur PID.

18. Système selon l'une quelconque des revendications 16 à 17,
**caractérisé en ce que**
le régulateur (203) est un régulateur numérique.

19. Système selon l'une quelconque des revendications 16 à 18,
**caractérisé en ce qu'**
il présente un comparateur (201) qui pour former la différence de régulation (p_{d}) compare une valeur de consigne (p_{cons,sec}) avec au moins une valeur seuil (p_{cons,min}), et un soustracteur (207) qui en fonction du résultat de la comparaison de la valeur de consigne (p_{cons,sec}) avec l'au moins une valeur seuil (p_{cons,min}) détermine une différence à partir de la valeur de consigne (p_{cons,sec}) et d'une valeur réelle (pₛ), ou une différence à partir de la valeur seuil (p_{cons,min}) et de la valeur réelle (pₛ).

20. Système selon l'une quelconque des revendications 16 à 19,
**caractérisé en ce qu'**
il présente un organe de réglage qui présente une ligne caractéristique d'organe de réglage, l'organe de réglage recevant un signal de réglage (Iₛ).

21. Système selon l'une quelconque des revendications 16 à 20,
**caractérisé en ce qu'**
il présente un élément de correction (206) qui linéarise la ligne caractéristique d'organe de réglage et fournit le signal de réglage (Iₛ).

22. Système selon l'une quelconque des revendications 16 à 21,
**caractérisé en ce que**
l'élément de correction (206) limite le signal de réglage (Iₛ) à une plage de valeurs prédéterminée.

23. Système selon l'une quelconque des revendications 16 à 22,
**caractérisé en ce que**
l'élément de correction (206) reçoit le signal de sortie de régulateur (yᵣ).

24. Système selon l'une quelconque des revendications 16 à 23,
**caractérisé en ce qu'**
il présente une commande pilote (202) qui fournit un signal pilote (yₛ), et l'élément de correction (206) reçoit une somme (yᵢ) formée par le signal de sortie de régulateur (yᵣ) et le signal pilote (yᵥ).

25. Système selon l'une quelconque des revendications 16 à 24,
**caractérisé en ce que**
la commande pilote (202) détermine le signal pilote (yᵥ) sur la base de la comparaison de la valeur de consigne (p_{conc,sec}) avec l'au moins une valeur seuil (p_{cons,min}).

26. Système selon l'une quelconque des revendications 16 à 25,
**caractérisé en ce que**
la valeur seuil (p_{cons,min}) est déterminée à partir de paramètres de fonctionnement de la boîte de vitesse, notamment de grandeurs qui représentent le débit de la pompe et la température de la boîte.

27. Système selon l'une quelconque des revendications 16 à 26,
**caractérisé en ce que**
la valeur réelle (pₛ) est influencée par une pompe, et le débit de la pompe est déduit de la vitesse de rotation du moteur.

28. Système selon l'une quelconque des revendications 16 à 27,
**caractérisé en ce que**
la commande pilote (202) génère le signal pilote (yᵥ) au moins lorsque la valeur de consigne (p_{cons,sec}) est augmentée.

29. Système selon l'une quelconque des revendications 16 à 28,
**caractérisé en ce que**
le signal de réglage (Iₛ) est généré en fonction d'un signal de sélection (fₘₒₜ) soit par le signal de sortie de régulateur (yᵣ) et/ou le signal pilote (yᵥ), soit par un signal de commande (yₛ).

30. Système selon l'une quelconque des revendications 16 à 29,
**caractérisé en ce que**
le signal de commande (yₛ) est déterminé par une commande (205) sur la base de la valeur de consigne (p_{cons,sec}) et de l'au moins une valeur seuil (p_{cons,min}).
